# EUROPÄISCHE PATENTSCHRIFT

(11) **EP 1 347 094 B1**
(45) Veröffentlichungstag und Bekanntmachung des Hinweises auf die Patenterteilung: **18.07.2007**
(21) Anmeldenummer: 03005019.9
(22) Anmeldetag: 06.03.2003
(51) Int. Cl.: D21D 5/26, D21B 1/34

(54) **Vorrichtung zum Fördern, Entgasen und Mischen von fliessfähigen Medien**
Apparatus for feeding, degassing and mixing fluid media
Dispositif d'alimentation, de dégazage et de mélange de substances liquides

(30) Priorität: 21.03.2002 AT 4322002
(43) Veröffentlichungstag der Anmeldung: 24.09.2003
(73) Patentinhaber: Andritz AG, 8045 Graz (AT)
(72) Erfinder: Grengg, Max, Dipl. Ing., 8053 Graz (AT); Strasser, Johann, Ing., 8151 Hitzendorf (AT); Henricson, Kaj, 00330 Helsingfors (FI)
(74) Vertreter: Schweinzer, Friedrich

(56) Entgegenhaltungen:
- EP-A- 0 381 660
- WO-A-87/00448
- WO-A-93/04757
- WO-A-93/07961
- WO-A-97/46310

## Beschreibung

Die Erfindung betrifft eine Vorrichtung zum Fördern von fließfähigen Medien, beispielsweise Faserstoffsuspensionen, wobei mit dem Medium mitgebrachte gasförmige Bestandteile abgetrennt werden und wobei eine Pumpe mit Pumpenrotor vorgesehen ist und zur Entgasung ein vom Pumpenrotor getrennter Rotor vorgesehen ist*.*

Derartige Vorrichtungen zum Abtrennen von gasförmigen Bestandteilen sind z.B. aus der AT 391628 oder der AT 396205 bekannt. Diese Vorrichtungen werden eingesetzt um Faserstoffsuspensionen im Mittelkonsistenzbereich zu entgasen und somit für eine nachfolgende Pumpe förderbar zu machen. In den meisten Fällen wird eine derartige Vorrichtung bei der Zufuhr zu einem Reaktionsbehälter eingesetzt. Hier ist es zusätzlich erforderlich nötige Chemikalien in die Faserstoffsuspension einzumischen. Derzeit erfolgt dies in speziellen Mischern z. B. nach der AT 403063 in der Zufuhrrohrleitung.

Die WO93/07961 A (AHLSTROEM OY) zeigt einen Mischer zum Einmischen von Gasen in Faserstoffsuspensionen, wobei das Gas in der Suspension verbleiben und sich nicht von dieser trennen soll. Weiters beschreibt die WO 87/00448 A (AHLSTROEM OY) eine Entgasungspumpe, bei der praktisch am Laufrad, d.h. nach der Entgasung, eine Chemikalienzufuhr vorgesehen ist. Diese befindet sich am Ausgang der Pumpe. In der WO 93/04757 A (ANDRITZ PATENTVERWALTUNG) ist ein Entgasungsrotor vorgesehen, wobei keine Einrichtungen zur Einmischung von Fluiden vorhanden sind. Die EP-A-0 381 660 (ANDRITZ AG) zeigt eine andere Variante eines Entgasungsrotors vor einer Pumpe, um die Suspension zu fluidisieren. Auch hier wird kein Fluid eingemischt.

Aus der WO 97/46310 A (BELOIT TECHNOLOGIES) ist ein Mischer bekannt, bei dem im Zentrum, d.h. an der Welle, Bohrungen zur Zugabe von Chemikalien vorgesehen sind. Die Zugabe erfolgt somit an den Stellen geringster (Rotations-) Geschwindigkeit. Bei der Anordnung quer zur Strömungsrichtung stellt der Mischer weiters einen großen Strömungswiderstand dar.

Soll Dampf zur Erwärmung des Mediums eingemischt werden, erfolgt dies oft durch am Rohrumfang angeordnete Düsen, so dass eine Aufteilung der zu dosierenden Gesamtmenge auf mehrere (viele) Dosierstellen erfolgt. Der Nachteil all dieser Anordnungen besteht darin, dass der Dampf, örtlich Überhitzungen an den Dosierstellen verursacht, was z.B. bei Faserstoffsuspensionen zu Schäden an den Fasern führen würde.

Ziel der Erfindung ist es nunmehr ein Fluid in ein fließfähiges Mediumbeispielsweise Faserstoffsuspension, (beispielsweise mittelkonsistente Zellstoffsuspension), gleichmäßig einzumischen und eine dazu geeignete Vorrichtung zu schaffen.

Die Erfindung ist daher dadurch gekennzeichnet, dass im Bereich des durch diesen Rotor erzeugten Vordruckes Vorrichtungen vorgesehen sind, mittels denen zuzusetzende Fluide mit hoher Relativgeschwindigkeit in das fließfähige Medium eingebracht werden.

Besonders günstig ist es, wenn der getrennt angeordnete Rotor eine Hohlwelle zur Abführung der mit dem Medium mitgebrachten Gase aufweist, wobei der Rotor eine weitere Hohlwelle zur Zufuhr des einzumischenden Fluids aufweisen kann.

Alternativ kann auch der Rotor eine Hohlwelle zur Zufuhr des einzumischenden Fluids aufweisen und die Abfuhr des mitgebrachten Gases durch ein getrenntes Rohr erfolgen.

Für eine optimale Gestaltung können mehrere Verteileinrichtungen zur Zufuhr von unterschiedlichen Medien vorgesehen sein.

Für eine besonders günstige Einmischung kann vorgesehen sein, dass ein weiterer Rotor angeordnet ist, der eine Hohlwelle zur Zufuhr eines Fluids, insbesondere Dampf, aufweist.

Eine besonders kompakte Lösung besteht darin, dass die Hohlwelle zur Zufuhr des Fluids durch die Welle der Pumpe geführt wird.

Die Erfindung ist weiters dadurch gekennzeichnet, dass gleichzeitig mit der Förderung, Entgasung und Erwärmung eines fließfähigen Mediums, ein Gas, vorzugsweise Reaktionsgas z.B. Sauerstoff, Ozon oder Chlor, aber auch Dampf in das Medium eingemischt wird.

Dies erfolgt beispielsweise durch mindestens eine, vorzugsweise mehrere, am Spiralgehäuse der Pumpe angeordnete Dosiereinrichtungen, z.B. Verteildüsen, so dass eine Aufteilung der zu dosierenden Gesamtmenge auf mehrere Dosierstellen erfolgt.

Die Erfindung wird nun anhand der Zeichnungen beispielhaft beschrieben, wobei Fig. 1 eine Vorrichtung zur Abtrennung von Gasen gemäß dem Stand der Technik, Fig. 2 eine Variante der Erfindung, Fig. 3 eine weitere Variante der Erfindung, Fig. 4 eine Variante der Erfindung mit mehreren Einspeisestellen, Fig. 5 eine Variante der Erfindung mit Rotor direkt vor der Ansaugöffnung der Pumpe, Fig. 6 eine Variante mit Hohlwelle durch die Pumpe und Fig. 7 zusätzliche Dosierstellen für Fluide jeder Art am Spiralgehäuse der Pumpe darstellt.

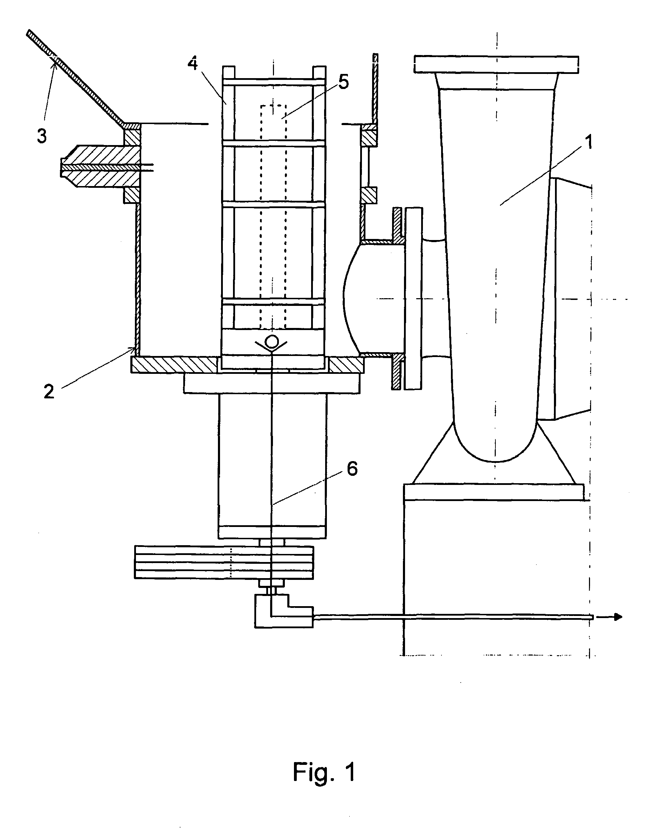

Fig. 1 zeigt eine Vorrichtung zur Entgasung einer mittelkonsistenten Faserstoffsuspension, mit einer Konsistenz von ca. 8 - 15 %, vor dem Zulauf zu einer Pumpe 1. Die Vorrichtung 2 ist am Boden eines Behälters 3 angebracht und reicht ein kurzes Stück in diesen Behälter hinein. Durch die Rotation des Rotors 4 wird die in der Faserstoffsuspension enthaltene Luft im Zentrum 5 gesammelt und über eine Leitung 6 nach außen abgeführt. Die entgaste Suspension wird durch die Pumpe 1 weitergefördert, wobei die Entgasung zur problemlosen Förderung unabdingbar ist.

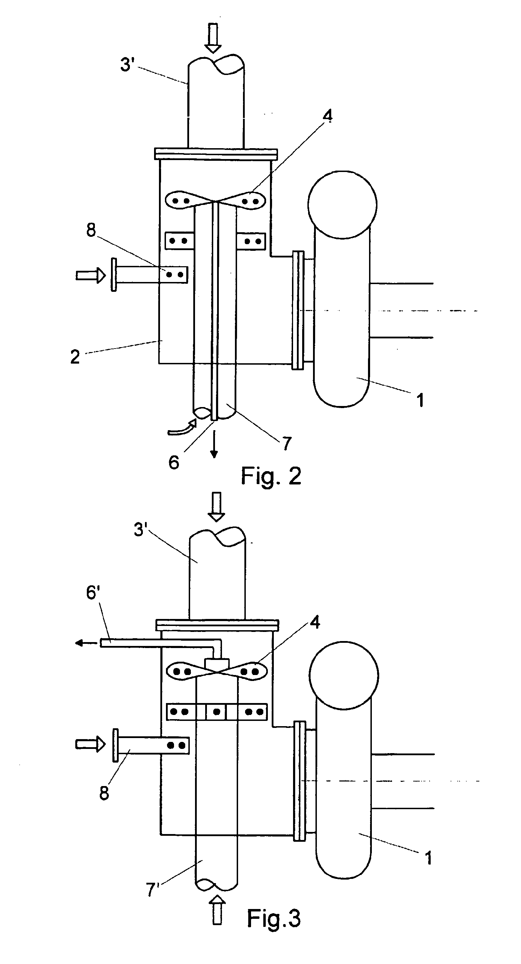

Fig. 2 zeigt eine analoge Variante gemäß der Erfindung. Über eine doppelte Hohlwelle werden gleichzeitig mit der Entgasung durch die innere Hohlwelle 6 des Rotors 4 des durch Leitung 3' zugeführten Mediums, über die äußere Hohlwelle 7 Dampf zur Aufwärmung des Mediums eingespeist. Der Dampf wird dabei über, mindestens einen, am Rotor befestigten Verteilstern mit hoher Relativgeschwindigkeit gegenüber dem Medium direkt in das Medium eingespeist. Weiters ist die Möglichkeit dargestellt auch zusätzliche Flüssigkeiten über Düsen 8 im Bereich der durch den Rotor 4 erzeugten Relativgeschwindigkeit einzubringen. Dies erfolgt direkt nach der Aufheizung durch Dampf, so dass bereits hier die erforderliche Reaktionstemperatur herrscht und eine gleichmäßige Reaktion gewährleistet wird. Durch die Förderung der Suspension mittels einer Pumpe 1 wird nochmals die Vermischung der Suspension mit den zugeführten Chemikalien verbessert und der für die Förderung und Reaktion notwendige Prozessdruck erzeugt.

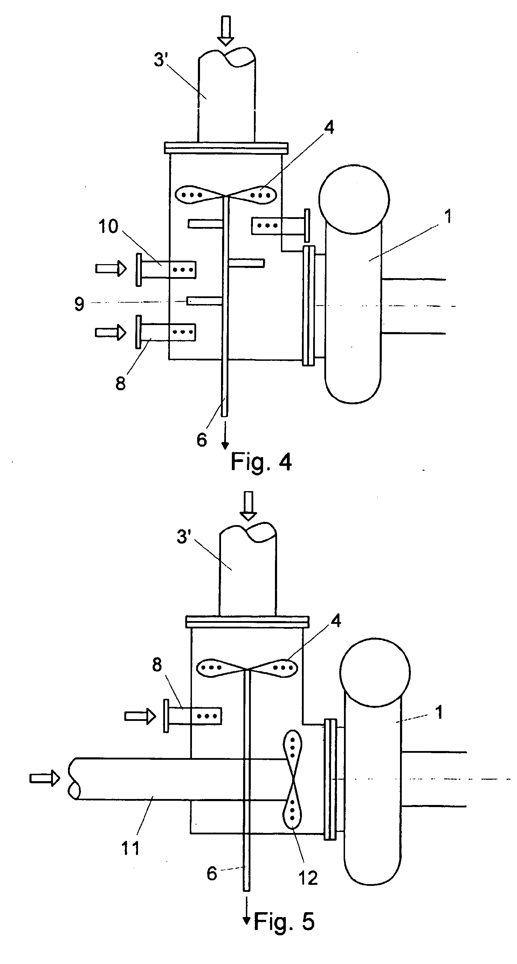

Eine alternative Ausgestaltung der Erfindung ist in Fig. 3 dargestellt. Hier werden mit dem Medium mitgebrachte Gase vom Rotor 4 über eine getrennte Leitung 6' aus dem Zentrum abgeführt und der das Medium erwärmende Dampf durch eine Hohlwelle 7' zugeführt. Auch hier ist die Möglichkeit der zusätzlichen Zufuhr von Flüssigkeiten vorgesehen. Anstelle von Dampf kann natürlich auch ein anderes Gas oder auch eine Flüssigkeit durch die Hohlwelle 7' (bzw. 7 in Fig. 2) direkt in den Bereich hoher Relativgeschwindigkeit des Rotors 4 zugeführt werden.

Fig. 4 zeigt eine Variante, bei der der Rotor 4 zusätzliche Verteileinrichtungen 9 aufweist und der Dampf durch separate Einrichtungen, z.B. Düsen 10 direkt in den durch den Rotor 4 erzeugten Bereich der hohen Relativgeschwindigkeit eingespeist und dort gleichmäßig verteilt wird.

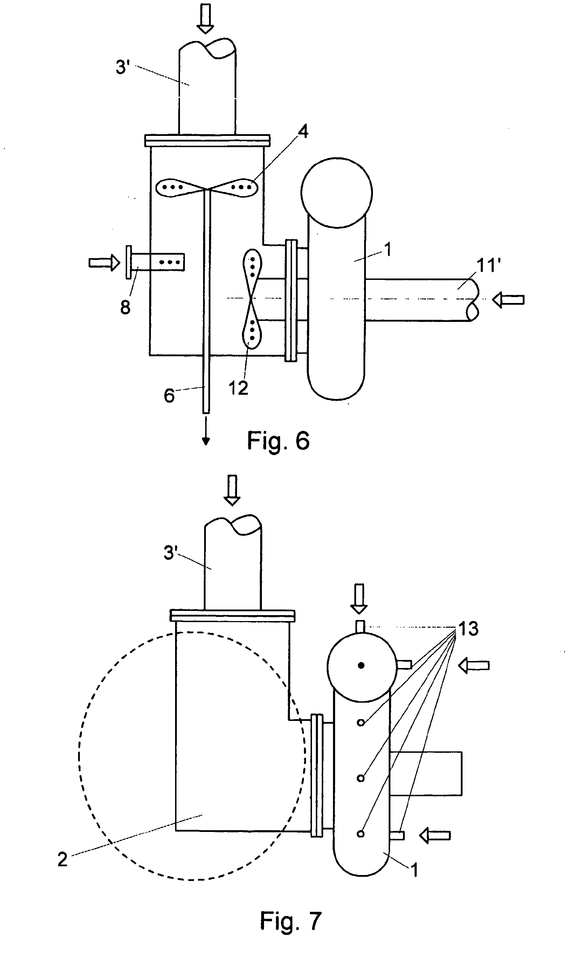

In Fig. 5 ist eine Variante dargestellt, bei der der Dampf durch eine getrennte Hohlwelle 11 mit einem Rotor 12 direkt vor dem Ansaugstutzen der Pumpe 1 zugeführt und somit eine noch gleichmäßigere Verteilung erzielt wird. Bei geeigneter Wahl des Abstandes des Rotors 12 mit den Austrittsdüsen ist der Dampf bereits beim Eintritt in die Pumpe kondensiert, so dass auch hier keine Gefahr von Gas- bzw. Dampfschlägen auftritt.

Die Variante von Fig. 6 entspricht der Ausführung von Fig. 5, wobei hier jedoch die Dampfzufuhr durch eine Hohlwelle 11' erfolgt, die durch die Pumpe hindurchgeführt wird. In diesem Fall kann auch der Rotor 12 mit der Pumpenwelle mitrotieren und benötigt keinen gesonderten Antrieb.

Bei der Variante von Fig. 7 entspricht der Bereich Rotor bis Pumpeneintritt einer der Varianten von Fig. 2 bis 6 oder einer Kombination oder Variation aus diesen. Zusätzlich sind an geeigneten Stellen des Spiralgehäuses der Pumpe 1 Dosierstellen 13 angebracht durch die dem Medium alle Arten von Fluiden zugesetzt werden können.

Im wesentlichen umfasst die Erfindung mehrere Abschnitte. Im ersten Abschnitt wird durch einen Rotor das Medium entgast. Der Rotor erzeugt zusätzlich einen Vordruck vor der das Medium fördernden Pumpe. Im Bereich zwischen diesem Rotor und der Pumpe (dem zweiten Abschnitt) sind Vorrichtungen installiert die es erlauben Dampf zum Erwärmen des Mediums und/oder Flüssigkeiten dem Medium fein verteilt zuzusetzen. Der dritte Abschnitt besteht aus der, das Medium fördernden, Pumpe. Zur Zufuhr von weiteren Fluiden aller Art können am Spiralgehäuse der Pumpe mindestens eine, in der Praxis mehrere, Dosierstellen angebracht sein (vierter Abschnitt des Pumpsystems).

## Patentansprüche

1. Vorrichtung zum Fördern von fließfähigen Medien, beispielsweise Faserstoffsuspensionen, wobei mit dem Medium mitgebrachte gasförmige Bestandteile abgetrennt werden und wobei eine Pumpe (1) mit Pumpenrotor vorgesehen ist, und zur Entgasung ein vom Pumpenrotor getrennter Rotor (4) vorgesehen ist, **dadurch gekennzeichnet, dass** im Bereich des durch diesen Rotor (4) erzeugten Vordruckes Vorrichtungen (7, 8) vorgesehen sind, mittels denen zuzusetzende Fluide mit hoher Relativgeschwindigkeit in das fließfähige Medium eingebracht werden.

2. Vorrichtung nach Anspruch 1, **dadurch gekennzeichnet, dass** der getrennt angeordnete Rotor (4) eine Hohlwelle (6) zur Abführung des Gases aufweist.

3. Vorrichtung nach Anspruch 2, **dadurch gekennzeichnet, dass** der Rotor (4) eine weitere Hohlwelle (7) zur Zufuhr des einzumischenden Fluids aufweist.

4. Vorrichtung nach Anspruch 1, **dadurch gekennzeichnet, dass** der Rotor (4) eine Hohlwelle (7') zur Zufuhr des einzumischenden Mediums aufweist und die Abfuhr des Gases durch ein getrenntes Rohr (6') erfolgt.

5. Vorrichtung nach Anspruch 1 oder 2, **dadurch gekennzeichnet, dass** mehrere Verteileinrichtungen (8) zur Zufuhr von unterschiedlichen Medien vorgesehen sind.

6. Vorrichtung nach Anspruch 1, **dadurch gekennzeichnet, dass** ein weiterer Rotor (12) vorgesehen ist, der eine Hohlwelle (11) zur Zufuhr eines Fluids, insbesondere Dampf, aufweist.

7. Vorrichtung nach Anspruch 6, **dadurch gekennzeichnet, dass** die Hohlwelle (11) durch die Welle der Pumpe (1) geführt wird.

8. Vorrichtung nach Anspruch 1, **dadurch gekennzeichnet, dass** mindestens eine, vorzugsweise mehrere, Dosiereinrichtungen (13) z.B. Verteildüsen, am Spiralgehäuse der Pumpe (1) vorgesehen sind.

## Claims

1. Device for conveying free-flowing media, for instance fibre stock suspensions, wherein the gaseous components entrained with the medium are separated, and wherein a pump (1) with pump rotor is provided and a rotor (4) that is separate from the pump rotor is provided for degassing, **characterised by** devices (7, 8) with which the fluids to be added are fed to the free-flowing medium at high relative speed being provided in the area of the preliminary pressure created by this rotor (4).

2. Device according to Claim 1, **characterised by** the separately arranged rotor (4) having a hollow shaft (6) for discharging the gas.

3. Device according to Claim 2, **characterised by** the rotor (4) having a further hollow shaft (7) for infeed of the fluid to be mixed in.

4. Device according to Claim 1, **characterised by** the rotor (4) having a hollow shaft (7') for infeed of the medium to be mixed in and by the discharge of the gas taking place through a separate tube (6').

5. Device according to Claim 1 or 2, **characterised by** several distribution units (8) being provided for infeed of different media.

6. Device according to Claim 1, **characterised by** a further rotor (12), which has a hollow shaft (11) for infeed of a fluid, especially steam, being provided.

7. Device according to Claim 6, **characterised by** the hollow shaft (11) running through the shaft of the pump (1).

8. Device according to Claim 1, **characterised by** at least one, preferably several dosing devices (13), e.g. distributing nozzles, being provided at the spiral casing of the pump (1).

## Revendications

1. Dispositif de convoyage des milieux coulants, par exemple, des suspensions de pâte fibreuse, où les composants gazeux entraînés par le milieu sont séparés et où une pompe (1) avec rotor de pompe est prévue et un rotor (4) qui est séparé du rotor de la pompe est prévu pour le dégazage, **caractérisé en ce que** des dispositifs (7, 8) par lesquels les fluides à ajouter sont amenés au milieu coulant à haute vitesse relative dans la zone de pression préliminaire créée par ce rotor (4) sont prévus.

2. Dispositif selon la revendication 1, **caractérisé en ce que** le rotor (4) disposé de façon séparée a un arbre creux (6) pour la décharge du gaz.

3. Dispositif selon la revendication 2, **caractérisé en ce que** le rotor (4) a un autre arbre creux (7) pour l'amenée du fluide à mélanger.

4. Dispositif selon la revendication 1, **caractérisé en ce que** le rotor (4) a un arbre creux (7') pour l'amenée du fluide à mélanger et la décharge du gaz a lieu à travers un tube séparé (6').

5. Dispositif selon la revendication 1 ou 2, **caractérisé en ce que** plusieurs unités de distribution (8) sont prévues pour l'amenée de milieux différents.

6. Dispositif selon la revendication 1, **caractérisé en ce qu'**un autre rotor (12), ayant un arbre creux (11) pour l'amenée d'un fluide, surtout de vapeur, est prévu.

7. Dispositif selon la revendication 6, **caractérisé en ce que** l'arbre creux (11) mène à travers l'arbre de la pompe (1).

8. Dispositif selon la revendication 1, **caractérisé en ce qu'**au moins un, de préférence plusieurs, dispositifs de dosage (13), p. ex. des buses de distribution, sont prévus au niveau de la volute de la pompe (1).
